# EUROPEAN PATENT APPLICATION

(11) **EP 4 650 276 A1**
(43) Date of publication of application: **19.11.2025**
(21) Application number: 25174318.3
(22) Date of filing: 05.05.2025
(51) Int. Cl.: B64D 13/02, F04D 29/056, F04D 17/10, F04D 17/12, F04D 25/02, F04D 29/051, F04D 29/053, F04D 29/057, F04D 29/26, F04D 29/28, F04D 29/62

(54) **HYDRODYNAMIC FOIL BEARING SHAFT**

(30) Priority: 13.05.2024 US 202418662186
(71) Applicant: Hamilton Sundstrand Corporation, Charlotte, NC 28217-4578 (US)
(72) Inventor: SCHUSTER, Zachary Alex, Chicago, IL, 60606 (US); SHAKIL, Ali, West Hartford, CT, 06117 (US); GIULIANO, John, North Granby, CT, 06060 (US); CLAVETTE, Jeremy, Farmington, CT, 06032 (US)
(74) Representative: Dehns

(57) **Abstract**

An air cycle machine (ACM) is provided and includes a rotor (110). The rotor (110) includes a rotor hub (111), an outlet housing (120) and on or more bearings. The rotor hub (111) includes rear and forward faces (112, 113), a central portion (114) axially interposed between the rear and forward faces (112, 113) and blades (115) extending radially outwardly from the central portion (114). The rotor hub (111) defines a pocket (140) having an open end and forms a foil bearing shaft (150). The outlet housing (120) includes a bearing support element (123), which is receivable in the pocket (140) via the open end. The one or more bearings (130) are supportively disposed within the bearing support element (123) to support rotation of the foil bearing shaft (150).

## Description

### BACKGROUND

The present disclosure relates to air cycle machines (ACMs) and, more particularly, to a hydrodynamic foil bearing shaft that is integral to a rotor of an ACM.

In aeronautics, ACMs are used in environmental control systems in aircraft to condition air for delivery to an aircraft cabin. Conditioned air is air at a temperature, pressure and humidity desirable for aircraft passenger comfort and safety. At or near ground level, the ambient air temperature and/or humidity is often sufficiently high that the air must be cooled as part of the conditioning process before being delivered to the aircraft cabin. At flight altitude, ambient air is often far cooler than desired, but at such a low pressure that it must be compressed to an acceptable pressure as part of the conditioning process. Compressing ambient air at flight altitude heats the resulting pressured air sufficiently that it must be cooled, even if the ambient air temperature is very low. Thus, under most conditions, heat must be removed from air by the air cycle machine before the air is delivered to the aircraft cabin. A cabin air compressor can be used to compress air for use in an environmental control system. The cabin air compressor includes a motor to drive a compressor section that in turn compresses air flowing through the cabin air compressor.

### BRIEF DESCRIPTION

According to an aspect of the disclosure, an air cycle machine (ACM) is provided and includes a rotor. The rotor includes a rotor hub, an outlet housing and on or more bearings. The rotor hub includes rear and forward faces, a central portion axially interposed between the rear and forward faces and blades extending radially outwardly from the central portion. The rotor hub defines a pocket having an open end and forms a foil bearing shaft. The outlet housing includes a bearing support element, which is receivable in the pocket via the open end. The one or more bearings are supportively disposed within the bearing support element to support rotation of the foil bearing shaft.

In accordance with additional or alternative embodiments, the central portion has an exterior surface with a non-linear profile from which the blades extend radially outwardly.

In accordance with additional or alternative embodiments, the outlet housing includes a forward face from which the bearing support element extends and the rear face of the rotor hub of the rotor is adjacent to the forward face of the outlet housing with the bearing support element received in the pocket.

In accordance with additional or alternative embodiments, gaps exist between adjacent surfaces of the rotor and the outlet housing with the bearing support element received in the pocket.

In accordance with additional or alternative embodiments, a closed end of the pocket is proximate to the forward face of the rotor hub of the rotor.

In accordance with additional or alternative embodiments, the one or more bearings are journal bearings.

In accordance with additional or alternative embodiments, a thrust ring is disposed within the outlet housing to form a cavity with the rear face and a thrust shaft includes a thrust disk disposed within the cavity and a forward portion shrunk fit to an inner diameter of the foil bearing shaft.

According to an aspect of the disclosure, an air cycle machine (ACM) is provided and includes first and second rotors, an outlet housing and one or more first and one or more second bearings. Each of the first and second rotors includes a rotor hub. Each rotor hub includes rear and forward faces, a central portion axially interposed between the rear and forward faces and blades extending radially outwardly from the central portion. Each rotor hub defines a pocket having an open end and forms a foil bearing shaft. The outlet housing includes first and second bearing support elements, which are respectively receivable in the respective pockets of the respective bodies of the first and second rotors. The one or more first and the one or more second bearings are supportively disposed within the first and second bearing support elements, respectively, to support rotation of the respective foil bearing shafts of the respective bodies of the first and second rotors.

In accordance with additional or alternative embodiments, the first rotor is a compressor rotor component and the second rotor is a turbine rotor component.

In accordance with additional or alternative embodiments, a tie rod extends through the respective foil bearing shafts of the respective bodies of the first and second rotors.

In accordance with additional or alternative embodiments, the respective central portions of the respective bodies of the first and second rotors have exterior surfaces with a non-linear profile from which the blades extend radially outwardly.

In accordance with additional or alternative embodiments, the outlet housing includes a forward face from which the first bearing support element extends and a rear face from which the second bearing support element extends and the rear face of the rotor hub of the first rotor is adjacent to the forward face of the outlet housing with the first bearing support element received in the corresponding pocket and the forward face of the rotor hub of the second rotor is adjacent to the rear face of the outlet housing with the second bearing support element received in the corresponding pocket.

In accordance with additional or alternative embodiments, first gaps exist between adjacent surfaces of the first rotor and the outlet housing with the first bearing support element received in the pocket of the rotor hub of the first rotor and second gaps exist between adjacent surfaces of the second rotor and the outlet housing with the second bearing support element received in the pocket of the rotor hub of the second rotor.

In accordance with additional or alternative embodiments, a closed end of the pocket of the rotor hub of the first rotor is proximate to the forward face of the rotor hub of the first rotor and a closed end of the pocket of the rotor hub of the second rotor is proximate to the rear face of the rotor hub of the second rotor.

In accordance with additional or alternative embodiments, the one or more first and the one or more second bearings are journal bearings.

According to an aspect of the disclosure, a method of assembling an air cycle machine (ACM) is provided. The includes forming a rotor to comprise a rotor hub, the rotor hub including rear and forward faces, a central portion axially interposed between the rear and forward faces, blades extending radially outwardly from the central portion and a foil bearing shaft. The method further includes machining a pocket into the rotor hub from the rear face, supportively disposing one or more bearings within a bearing support element of an outlet housing and inserting the bearing support element into the pocket whereby the one or more bearings are supportively disposed within the bearing support element to support rotation of the foil bearing shaft.

In accordance with additional or alternative embodiments, the forming of the rotor and the machining of the pocket are executed such that gaps exist between adjacent surfaces of the rotor and the outlet housing with the bearing support element inserted into the pocket.

In accordance with additional or alternative embodiments, the machining of the pocket is executed such that a closed end of the pocket is proximate to the forward face of the rotor hub of the rotor.

In accordance with additional or alternative embodiments, the one or more bearings are journal bearings.

In accordance with additional or alternative embodiments, the machining of the pocket forms a rotor shaft and the method further includes bolting a thrust ring into the outlet housing to define a cavity with the rear face, disposing a thrust disk of a thrust shaft within the cavity and shrink fitting a forward portion of the thrust shaft into an inner diameter of the foil bearing shaft.

Additional features and advantages are realized through the techniques of the present disclosure. Other embodiments and aspects of the disclosure are described in detail herein and are considered a part of the claimed technical concept. For a better understanding of the disclosure with the advantages and the features, refer to the description and to the drawings.

### BRIEF DESCRIPTION OF THE DRAWINGS

For a more complete understanding of this disclosure, reference is now made to the following brief description, taken in connection with the accompanying drawings and detailed description, wherein like reference numerals represent like parts:
FIG. 1 is a side view of an ACM with a set of hydrodynamic foil bearings in accordance with embodiments;
FIG. 2 is a side view of an ACM with an single elongated hydrodynamic foil bearing in accordance with embodiments;
FIG. 3 is a side view of an ACM with a separate thrust plate in accordance with embodiments;
FIG. 4 is a perspective view of a 2-wheel ACM in accordance with embodiments; and
FIG. 5 is a flow diagram illustrating a method of assembling an ACM in accordance with embodiments.

### DETAILED DESCRIPTION

ACM assemblies that are supported radially on hydrodynamic foil bearings traditionally couple a series of rotors with precision-machined shafts that are concentric to the hydrodynamic foil bearing supports. This leads to increased costs and weight of the ACM assemblies.

Thus, as will be described below, an ACM assembly is provided that removes the need for separate precision-machined shafts. The ACM assembly is thus characterized in that a hydrodynamic foil bearing shaft is incorporated within a rotor. A pocket is machined into the rear face of the rotor such that the rotor can be installed over the static foil bearing support, fitted with journal bearings and supported from within the rotor itself.

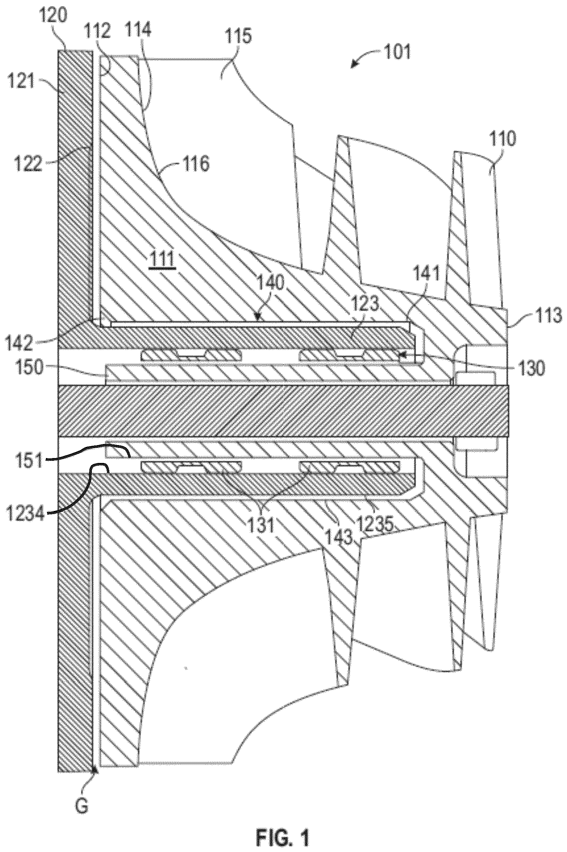

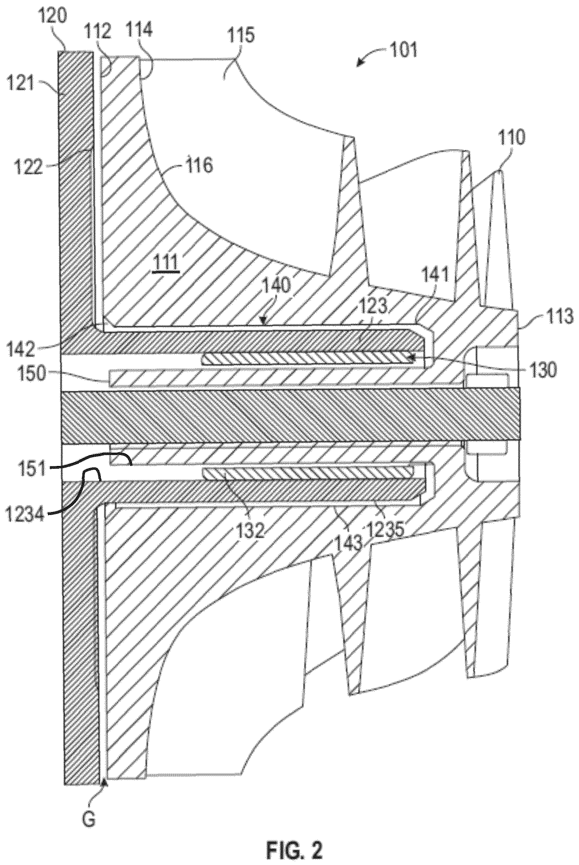

With reference to FIGS. 1 and 2, a portion of an ACM 101 is provided and includes a rotor 110, an outlet housing 120 and one or more bearings 130.

The rotor 110 includes a rotor hub 111. The rotor hub 111 includes a rear face 112, a forward face 113, a central portion 114 that is axially interposed between the rear face 112 and the forward face 113 and blades 115. The central portion 114 has an exterior surface 116, which may have a non-linear profile. The blades 115 extend radially outwardly from the exterior surface 116 of the central portion 114. The rotor hub 111 is also formed to define a pocket 140, which is machined into the rotor hub 111. The pocket 140 is elongate and has a closed end 141 and an open end 142. The closed end 141 is proximate to the forward face 113. The open end 142 is open at a plane of the rear face 112. With the rotor hub 111 formed to define the pocket 140, the rotor hub 111 effectively forms or further includes a foil bearing shaft 150 integrally connected with an interior diameter of the rotor hub 111.

The outlet housing 120 includes a planar base member 121 with a forward face 122, a bearing support element 123 and a flange (not shown) protruding forwardly from an outboard portion of the forward face 122. The bearing support element 123 extends from the forward face 122 of the planar base member 121 and can be hollow. The bearing support element 123 can be cylindrical and receivable in or insertable into the pocket 140 of the rotor hub 111 of the rotor 110. The foil bearing shaft 150 is similarly receivable in or insertable into the bearing support element 123.

With the bearing support element 123 received in the pocket 140 and with the foil bearing shaft 150 received in the bearing support element 123, an exterior facing surface 151 of the foil bearing shaft 150 faces an interior facing surface 1234 of the bearing support element 123 and an exterior facing surface 1235 of the bearing support element 123 faces an interior facing surface 143 of the pocket 140. Also, with the bearing support element 123 received in the pocket 140 and with the foil bearing shaft 150 received in the bearing support element 123, the rear face 112 is nearly adjacent to the forward face 122. In this condition, gaps G may exist between nearly adjacent surfaces of the rotor 110 and the outlet housing 120 (i.e., between the rear face 112 and the forward face 122). A thrust bearing or hydrodynamic foil can be disposed within the gaps G to support axial loads.

The one or more bearings 130 are supportively disposed on or installed into the interior facing surface 1234 of the bearing support element 123 within the bearing support element 123 to bear against the exterior facing surface 151 of the foil bearing shaft 150 and to thereby support rotation of the foil bearing shaft 150 and the rotor 110. The one or more bearings 130 may include or be provided as journal bearings 131 or, in some cases, as a set of journal bearings 131 or hydrodynamic foil bearings (see FIG. 1) and/or as an elongated journal bearing 132 or a hydrodynamic foil bearing (see FIG. 2). As will be understood by one of ordinary skill in the art, the one or more bearings 130 can have other similar configurations.

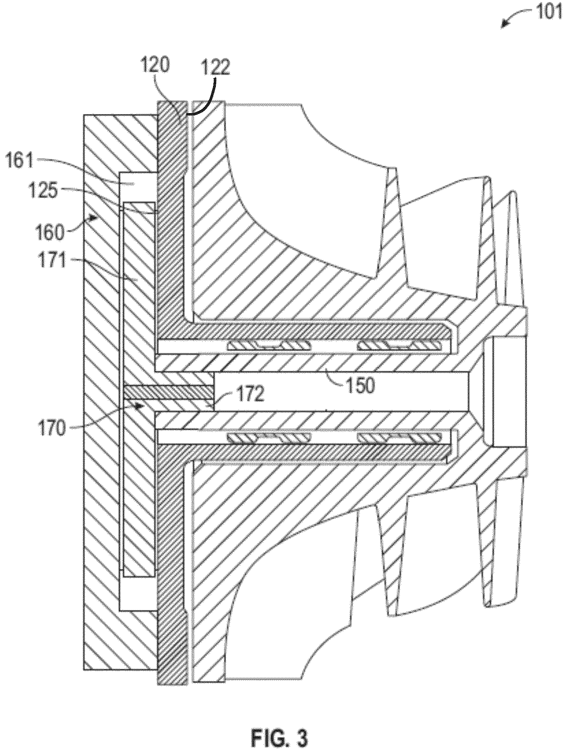

With reference to FIG. 3, the outlet housing 120 can further include a rear face 125 opposite the forward face 122 and the portion of the ACM 101 can further include a thrust ring 160 and a thrust shaft 170. The thrust ring 160 can be disposed within the outlet housing 120 to form a cavity 161 with the rear face 125. The thrust shaft 170 can include a thrust disk 171 that is disposed within the cavity 161 and a forward portion 172 that is shrunk fit to an inner diameter of the foil bearing shaft 150.

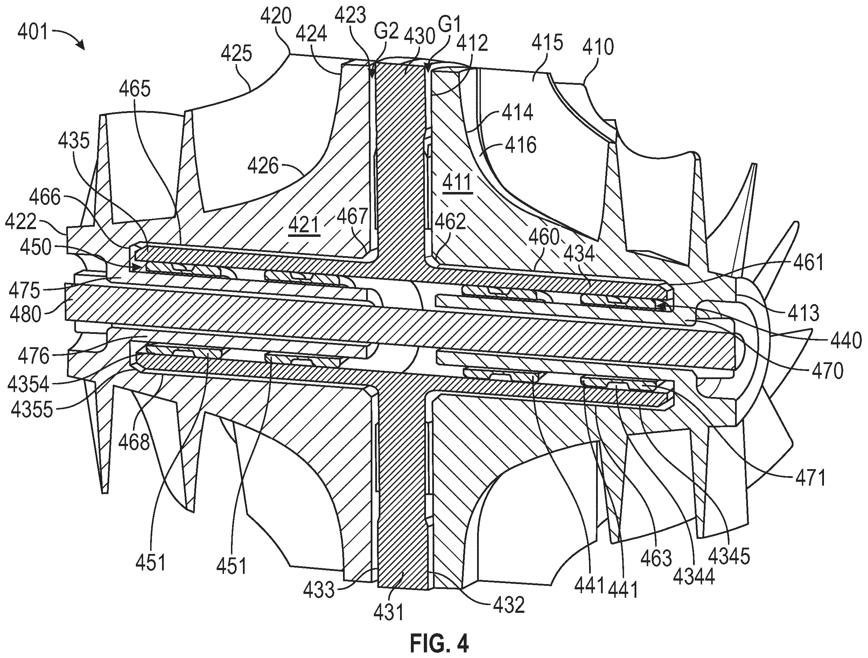

With reference to FIG. 4, a portion of a two-wheel ACM 401 is provided and includes a first rotor 410, a second rotor 420, an outlet housing 430, one or more first bearings 440 and one or more second bearings 450. The first rotor 410 can include or be provided as a compressor rotor component and the second rotor 420 can include or be provided as a turbine rotor component.

The first rotor 410 includes a first rotor hub 411. The first rotor hub 411 includes a rear face 412, a forward face 413 opposite the rear face 412, a central portion 414 that is axially interposed between the rear face 412 and the forward face 413 and blades 415. The central portion 414 has an exterior surface 416, which may have a non-linear profile. The blades 415 extend radially outwardly from the exterior surface 416 of the central portion 414. The first rotor hub 411 is also formed to define a first pocket 460, which is machined into the first rotor hub 411. The first pocket 460 is elongate and has a closed end 461 and an open end 462. The closed end 461 is proximate to the forward face 413. The open end 462 is open at a plane of the rear face 412. With the first rotor hub 411 formed to define the first pocket 460, the first rotor hub 411 effectively forms or further includes a first foil bearing shaft 470 integrally connected with an interior diameter of the first rotor hub 411.

The second rotor 420 includes a second rotor hub 421. The second rotor hub 421 includes a rear face 422, a forward face 423 opposite the rear face 422, a central portion 424 that is axially interposed between the rear face 422 and the forward face 423 and blades 425. The central portion 424 has an exterior surface 426, which may have a non-linear profile. The blades 425 extend radially outwardly from the exterior surface 426 of the central portion 424. The second rotor hub 421 is also formed to define a second pocket 465, which is machined into the rotor hub 421. The second pocket 465 is elongate and has a closed end 466 and an open end 467. The closed end 466 is proximate to the rear face 422. The open end 467 is open at a plane of the rear face 422. With the second rotor hub 421 formed to define the second pocket 465, the second rotor hub 421 effectively forms or further includes a second foil bearing shaft 475 integrally connected with an interior diameter of the second rotor hub 421.

The outlet housing 430 includes a planar base member 431 with a forward face 432, a rear face 433 opposite the forward face 432, a first bearing support element 434, a second bearing support element 435, a first flange (not shown) protruding forwardly from an outboard portion of the forward face 432 and a second flange (not shown) protruding rearwardly from an outboard portion of the rear face 122. The first bearing support element 434 extends from the forward face 432 of the planar base member 431 and can be hollow. The first bearing support element 434 can be cylindrical and receivable in or insertable into the first pocket 460 of the first rotor hub 411 of the first rotor 410. The first foil bearing shaft 470 is similarly receivable in or insertable into the first bearing support element 434. The second bearing support element 435 extends from the rear face 433 of the planar base member 431 and can be hollow. The second bearing support element 435 can be cylindrical and receivable in or insertable into the second pocket 465 of the second rotor hub 421 of the second rotor 420. The second foil bearing shaft 475 is similarly receivable in or insertable into the second bearing support element 435.

With the first bearing support element 434 received in the first pocket 460 and with the first foil bearing shaft 470 received in the first bearing support element 434, an exterior facing surface 471 of the first foil bearing shaft 470 faces an interior facing surface 4344 of the first bearing support element 434 and an exterior facing surface 4345 of the first bearing support element 434 faces an interior facing surface 463 of the first pocket 460. Also, with the first bearing support element 434 received in the first pocket 460 and with the first foil bearing shaft 470 received in the first bearing support element 434, the rear face 412 is nearly adjacent to the forward face 432. In this condition, first gaps G1 may exist between nearly adjacent surfaces of the first rotor 410 and the outlet housing 430 (i.e., between the rear face 412 and the forward face 432). A thrust bearing or hydrodynamic foil can be disposed within each of the first gaps G1 to support axial loads.

The one or more first bearings 440 are supportively disposed on or installed into the interior facing surface 4344 of the first bearing support element 434 within the first bearing support element 434 to bear against the exterior facing surface 471 of the first foil bearing shaft 470 and to thereby support rotation of the first foil bearing shaft 470 and the first rotor 410. The one or more first bearings 440 may include or be provided as journal bearings or, in some cases, as a set of journal bearings 441 or hydrodynamic foil bearings and/or as an elongate journal bearing or an elongate hydrodynamic foil bearing as shown in FIG. 2. As will be understood by one of ordinary skill in the art, the one or more first bearings 440 can have other similar configurations.

With the second bearing support element 435 received in the second pocket 465 and with the second foil bearing shaft 475 received in the second bearing support element 435, an exterior facing surface 476 of the second foil bearing shaft 475 faces an interior facing surface 4354 of the second bearing support element 435 and an exterior facing surface 4355 of the second bearing support element 435 faces an interior facing surface 468 of the second pocket 465. Also, with the second bearing support element 435 received in the second pocket 465 and with the second foil bearing shaft 475 received in the second bearing support element 435, the forward face 423 is nearly adjacent to the rear face 433. In this condition, second gaps G2 may exist between nearly adjacent surfaces of the second rotor 420 and the outlet housing 430 (i.e., between the forward face 423 and the rear face 433). A thrust bearing or hydrodynamic foil can be disposed within each of the second gaps G2 to support axial loads.

The one or more second bearings 450 are supportively disposed on or installed into the interior facing surface 4354 of the second bearing support element 435 within the second bearing support element 435 to bear against the exterior facing surface 476 of the second foil bearing shaft 475 and to thereby support rotation of the second foil bearing shaft 475 and the second rotor 420. The one or more second bearings 450 may include or be provided as journal bearings or, in some cases, as a set of hydrodynamic foil bearings 451 and/or as a single elongated hydrodynamic foil bearing as shown in FIG. 2. As will be understood by one of ordinary skill in the art, the first one or more second bearings 450 can have other similar configurations.

The portion of the two-wheel ACM 401 can further include a tie rod 480 extending through the first foil bearing shaft 470 and the second foil bearing shaft 475 to connect the first rotor 410 and the second rotor 420.

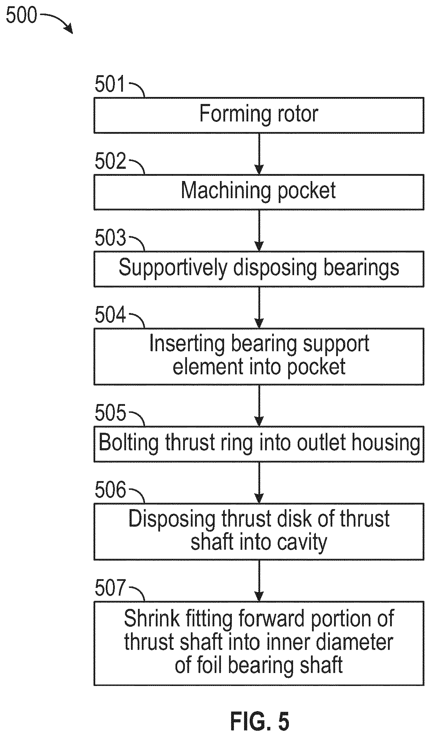

With reference to FIG. 5, a method 500 of assembling an ACM, such as the portion of the ACM 101 of FIGS. 1-3, is provided. While the method 500 is presented in relation to the portion of the ACM 101 of FIGS. 103, it is to be understood that the method 500 is compatible with an assembly of the portion of the ACM 401 of FIG. 4 with no undue experimentation needed.

As shown in FIG. 5, the method 500 includes forming a rotor (block 501) to include a rotor hub where the rotor hub includes rear and forward faces, a central portion axially interposed between the rear and forward faces, blades extending radially outwardly from the central portion and a foil bearing shaft. The method 500 further includes machining a pocket into the rotor hub from the rear face (block 502), supportively disposing one or more bearings (i.e., hydrodynamic foil bearings) within a bearing support element of an outlet housing (block 503) and inserting the bearing support element into the pocket whereby the one or more bearings are supportively disposed within the bearing support element to support rotation of the foil bearing shaft (block 504).

In accordance with embodiments, the forming of the rotor of block 501 and the machining of the pocket of block 502 can be executed such that gaps (i.e., thrust bearing or hydrodynamic foil locations) exist between adjacent surfaces of the rotor and the outlet housing with the bearing support element inserted into the pocket. In addition, the machining of the pocket of block 502 can be executed such that a closed end of the pocket is proximate to the forward face of the rotor hub of the rotor.

In accordance with further embodiments, the machining of the pocket of block 502 forms a rotor shaft and the method further includes bolting a thrust ring into the outlet housing to define a cavity with the rear face (block 505), disposing a thrust disk of a thrust shaft within the cavity (block 506) and shrink fitting a forward portion of the thrust shaft into an inner diameter of the foil bearing shaft (block 507).

Technical effects and benefits of the present disclosure are the provision of an ACM with a reduced overall part count that allows for a simplified assembly process and that drives cost reductions by reducing the labor hours required to assemble the ACM. In addition, an ACM arrangement that incorporates hydrodynamic foil bearings within the rotor as described herein will be much more compact than that of a traditional ACM arrangement, opening more market opportunity for customers that require smaller air cycle systems.

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description, but is not intended to be exhaustive or limited to the technical concepts in the form disclosed. Many modifications and variations will be apparent to those of ordinary skill in the art without departing from the scope of the disclosure. The embodiments were chosen and described in order to best explain the principles of the disclosure and the practical application, and to enable others of ordinary skill in the art to understand the disclosure for various embodiments with various modifications as are suited to the particular use contemplated.

While the preferred embodiments to the disclosure have been described, it will be understood that those skilled in the art, both now and in the future, may make various improvements and enhancements which fall within the scope of the claims which follow. These claims should be construed to maintain the proper protection for the disclosure first described.

## Claims

1. An air cycle machine, ACM (101), comprising:
a rotor (110) comprising a rotor hub (111), the rotor hub (111) comprising:
rear and forward faces (112, 113);
a central portion (114) axially interposed between the rear and forward faces (112, 113); and
blades (115) extending radially outwardly from the central portion (114),
the rotor hub (111) defining a pocket (140) having an open end and forming a foil bearing shaft (150);
an outlet housing (120) comprising a bearing support element (123), which is receivable in the pocket (140) via the open end; and
one or more bearings (130) supportively disposed within the bearing support element (123) to support rotation of the foil bearing shaft (150).

2. The ACM according to claim 1, wherein the central portion (114) has an exterior surface with a non-linear profile from which the blades (115) extend radially outwardly.

3. The ACM according to claim 1 or 2, wherein:
the outlet housing (120) comprises a forward face from which the bearing support element (123) extends, and
the rear face of the rotor hub (111) of the rotor (110) is adjacent to the forward face of the outlet housing (120) with the bearing support element (123) received in the pocket (140).

4. The ACM according to any preceding claim, wherein gaps exist between adjacent surfaces of the rotor (110) and the outlet housing (120) with the bearing support element (123) received in the pocket (140).

5. The ACM according to any preceding claim, wherein a closed end of the pocket (140) is proximate to the forward face of the rotor hub (111) of the rotor (110).

6. The ACM according to any preceding claim, wherein the one or more bearings (130) are journal bearings.

7. The ACM according to any preceding claim, further comprising:
a thrust ring disposed within the outlet housing (120) to form a cavity with the rear face; and
a thrust shaft comprising a thrust disk disposed within the cavity and a forward portion shrunk fit to an inner diameter of the foil bearing shaft (150).

8. An air cycle machine, ACM (401), comprising:
first and second rotors (410, 412), each comprising a rotor hub (411, 421) and each rotor hub (411, 421) comprising:
rear and forward faces (412, 413, 422, 423);
a central portion (414, 424) axially interposed between the rear and forward faces; and
blades (415, 425) extending radially outwardly from the central portion,
each rotor hub (411, 421) defining a pocket (460, 465) having an open end and forming a foil bearing shaft (470, 475);
an outlet housing (430) comprising first and second bearing support elements (434, 435), which are respectively receivable in the respective pockets of the respective bodies of the first and second rotors (410, 412); and
one or more first and one or more second bearings (440, 450) supportively disposed within the first and second bearing support elements, respectively, to support rotation of the respective foil bearing shafts of the respective bodies of the first and second rotors (410, 412).

9. The ACM according to claim 8, wherein the first rotor (410) is a compressor rotor component and the second rotor is a turbine rotor component.

10. The ACM according to claim 8 or 9, further comprising a tie rod (480) extending through the respective foil bearing shafts of the respective bodies of the first and second rotors (410, 412); and/or wherein the respective central portions of the respective bodies of the first and second rotors (410, 412) have exterior surfaces with a non-linear profile from which the blades extend radially outwardly; and/or wherein:
the outlet housing (43) comprises a forward face (432) from which the first bearing support element extends and a rear face (433) from which the second bearing support element extends, and
the rear face of the rotor hub (411) of the first rotor is adjacent to the forward face of the outlet housing with the first bearing support element received in the corresponding pocket and the forward face of the rotor hub (421) of the second rotor is adjacent to the rear face of the outlet housing with the second bearing support element received in the corresponding pocket; and/or wherein:
first gaps (G1) exist between adjacent surfaces of the first rotor and the outlet housing with the first bearing support element received in the pocket of the rotor hub (411) of the first rotor, and
second gaps (G2) exist between adjacent surfaces of the second rotor and the outlet housing with the second bearing support element received in the pocket of the rotor hub (421) of the second rotor; and/or wherein:
a closed end of the pocket of the rotor hub (411) of the first rotor is proximate to the forward face of the rotor hub (411) of the first rotor, and
a closed end of the pocket of the rotor hub (421) of the second rotor is proximate to the rear face of the rotor hub (421) of the second rotor; and/or
wherein the one or more first and the one or more second bearings are journal bearings.

11. A method of assembling an air cycle machine, ACM, the method comprising:
forming a rotor (110) to comprise a rotor hub (111), the rotor hub (111) comprising:
rear and forward faces (112, 113);
a central portion (114) axially interposed between the rear and forward faces (112, 113);
blades (115) extending radially outwardly from the central portion (114); and
a foil bearing shaft (150),
the method further comprising:
machining a pocket (140) into the rotor hub (111) from the rear face;
supportively disposing one or more bearings (130) within a bearing support element (123) of an outlet housing (120); and
inserting the bearing support element (123) into the pocket (140) whereby the one or more bearings (130) are supportively disposed within the bearing support element (123) to support rotation of the foil bearing shaft (150).

12. The method according to claim 11, wherein the forming of the rotor and the machining of the pocket (140) are executed such that gaps exist between adjacent surfaces of the rotor (110) and the outlet housing (120) with the bearing support element (123) inserted into the pocket (140).

13. The method according to claim 11 or 12, wherein the machining of the pocket (140) is executed such that a closed end of the pocket (140) is proximate to the forward face of the rotor hub (111) of the rotor (110).

14. The method according to any of claims 11-13, wherein the one or more bearings (130) are journal bearings.

15. The method according to any of claims 11-14, wherein the machining of the pocket (140) forms a rotor shaft and the method further comprises:
bolting a thrust ring into the outlet housing (120) to define a cavity with the rear face;
disposing a thrust disk of a thrust shaft within the cavity; and
shrink fitting a forward portion of the thrust shaft into an inner diameter of the foil bearing shaft (150).
